# EUROPEAN PATENT APPLICATION

(11) **EP 2 404 508 A1**
(43) Date of publication of application: **11.01.2012**
(21) Application number: 10169133.5
(22) Date of filing: 09.07.2010
(51) Int. Cl.: A23L 1/30, A23L 2/72, A23L 2/84, C12G 3/08

(54) **Method for producing a liquid with reduced saccharide content**

(71) Applicant: LoHaS Products GmbH, 20149 Hamburg (DE)
(72) Inventor: Eckhoff, Heinrich, 20149 Hamburg (DE)
(74) Representative: UEXKÜLL & STOLBERG

(57) **Abstract**

The present invention provides methods for producing a liquid comprising:
(a) providing a first liquid comprising an extract of plant material;
(b) filtering the first liquid with a filter having a pore size between 4000 and 100 Dalton to generate a second liquid comprising more components having a size larger than the pore size of the filter, including at least 18% of the saccharides, and a third liquid comprising more components having a size smaller than the pore size of the filter;
(c) incubating the second liquid with microorganisms under conditions allowing a fermentation until the saccharide content of the second liquid is reduced by at least 20% due to microbial fermentation;
(e) removing at least 80% of the alcohol or 80% of other fermentation products from the fermented liquid to obtain a fourth liquid;
(f) combining at least a part of the fourth liquid with at least a part of the third liquid.

The present invention further provides liquids, fruit juices and food additives obtainable by these methods.

## Description

Saccharides and in particular mono- and disaccharides, such as glucose, fructose, sucrose, etc, represent food components causing significant health problems in the population of industrialized nations. It is for example generally accepted that the significant increase of patients diagnosed with Type II diabetes is caused by excess consumption of saccharides.

A significant part of the saccharides is consumed in the form of beverages, for example as fruit juices, soft drinks, etc. Various attempts have been made to reduce the saccharide content of food products. However, until now these approaches have not been successfully implemented in the form of fruit juices, as the removal of the natural saccharides from juices according to known methods also causes removal of plant compounds (vitamins, essential amino acids, pigments, acids, etc.) having the same size or other properties as the saccharides. While a number of artificial sweeteners are available to substitute the sweet taste of saccharides in beverages, consumers did not accept the change of taste, color and/or concentration caused by the reduced presence of respective plant compounds in fruit juices having reduced saccharide content.

It is well known to convert saccharides to alcohol by microbial fermentation. However, this approach is entirely unsuitable to remove the energy uptake by a consumer, as alcohol still contains significant amounts of energy. Further, the presence of alcohol in beverages causes separate health problems.

A number of publications are available disclosing the transformation of saccharides into alcohol using microbial fermentation and subsequent removal of the alcohol for example by reverse osmosis. Reverse osmosis is a separation process that uses pressure to force a solvent through a semi-permeable membrane that retains the solute on one side and allows the pure solvent to pass to the other side. In this case alcohol is allowed to pass through the membrane, whereas components with a higher molecular weight are maintained in the fermented liquid. However, this approach causes removal of plant compounds having the same or a smaller size than alcohol.

In an alternative approach it has been suggested to transfer saccharides by microbial fermentation into gluconic acid. The gluconic acid may subsequently be removed or maintained in the liquid. The former approach again causes removal of plant compounds and the latter approach leads to rather acidic beverages. Significant amounts of artificial sweeteners have to be added to mask the acidic taste. Addition of the sweetener causes a sweet-sour taste that again deviates from the natural taste of the fruit juice.

There is thus still a need for providing methods for producing liquids from plant material having a reduced saccharide content. In particular there is a need for providing fruit juices with reduced saccharide content which maintain significant parts of the plant products present in natural fruit juices which have about the same size as saccharides.

This problem is solved according to the present invention by methods for producing a liquid comprising:
(a) providing a first liquid comprising an extract of plant material;
(b) filtering the first liquid with a filter having a pore size between 4000 and 100 Dalton to generate a second liquid comprising more components having a size larger than the pore size of the filter, including at least 18% of the saccharides, and a third liquid comprising more components having a size smaller than the pore size of the filter;
(c) incubating the second liquid with microorganisms under conditions allowing a fermentation until the saccharide content of the second liquid is reduced by at least 20% due to microbial fermentation;
(e) removing at least 80% of the alcohol or 80% of other fermentation products from the fermented liquid to obtain a fourth liquid;
(f) combining at least a part of the fourth liquid with at least a part of the third liquid.

The present inventors have surprisingly found that the combination of these steps produces a liquid from plant material that has excellent properties as a beverage and significantly reduced saccharide content. Except for the saccharides, the liquid maintains essentially all of the secondary plant components of beverages obtained from plant material, such as fruit juices. In a preferred embodiment of the invention, the liquid is mixed with an alternative saccharide free sweetener thus restoring the natural sweet taste of the fruit juice.

The present invention is based on the understanding that the removal of metabolic products generated by microorganisms during fermentation carried out for reducing the saccharide content of the liquid, such as removal of alcohol, will also remove small plant compounds, including vitamins, essential amino acids, pigments, anthocyanins and in particular acids, such as citric acid, tartaric acid, malic acid, succinic acid, pyroglutamic acid, etc. The removal of these small plant compounds, particularly the removal of the acids present in natural fruit juices, affects the taste of the fruit juice.

The present invention solves this problem by separating the plant extract into at least two fractions (step (b)):
● one fraction comprises a significant part of the saccharides and more plant compounds having the same or a larger size as well as a smaller fraction of plant compounds having a smaller size than the saccharides;
● another fraction that comprises more plant compounds smaller than saccharides in comparison to the previous fraction, such as the acids.

The fraction containing the saccharides and plant compounds having the same or a larger size is fermented (step (c)). The metabolic product of the fermentation process has a smaller size than the saccharides. This provides the basis for separating the fermentation products from the other plant compounds in a further step of the process (step (d)).

In the present application the term "saccharides" is used to refer to monosaccharides, disaccharides and oligosaccharides containing up to 10 monosaccharides. In the context of the present invention larger oligo- and polysaccarides are not considered to represent saccharides. Polysaccharides such as starch or amylose also do not play a significant role in the present invention, as they cause significantly less health problems.

As is directly evident, it may not necessary to remove substantially all or even more than half of the saccharides present the first liquid in the filtration step (b). The amount of saccharides present after the filtration step can thus be varied at will by one of ordinary skill using different plant starting material, different filters or filtering conditions (time, pressure, etc.). Accordingly, in the methods of the present invention at least 18% of the saccharides are removed. In preferred embodiments, at least 30%, at least 50%, at least 75% or at least 90% of the saccharides can be removed. Evidently, up to 100% of the saccharides can be removed if desired, although it is often preferred to remove less than 100%, for example up to 95% or up to 98%. As a consequence it is especially preferred that the methods of the present invention remove between 18 and 100%, between 50 and 98% or between 75 and 98% of the saccharides in step (b).

Accordingly the methods of the present invention may use a filter in step (a) with a pore size between 4000 and 100 Dalton, preferably between 3000 and 150, between 2500 and 150, between 2000 and 200 or between 1600 and 200 Dalton.

According to one embodiment of the present invention components having a size of larger than 4000 Dalton and smaller than 100 Dalton are at least partially removed by filtration from the extract in step (b) and the fraction comprising components with a size between 100 and 4000 Dalton is fermented in step (c). This embodiment thus comprises a two fold filtration in step (b), the components larger than saccharides are separated by filtration and the components smaller than saccharides are separated by filtration. A liquid comprising the sachharides and components having the same size as the saccharides is fermented, a fermentation product (alcohol) is obtained that has a smaller size than the saccharides, the fermentation product is removed from the fermented liquid and the fermented liquid is mixed with the fractions previously removed. Again, none of these filtration or fermentation processes has to be carried out to completion, as significant advantages can already be achieved if a certain fraction of the saccharides can be removed without affecting the taste of the product.

According to a further aspect, the present invention provides methods as described above, wherein the liquid for fermentation, i.e. the third liquid, is diluted with water prior to or during fermentation. Diluting the liquid prior to fermentation may have the advantage that the fermentation process generates less flavoring substances, as fermentation in the presence of high amounts of saccharides may generate significant amounts of flavoring substances, which in turn may affect the taste of the product. In one aspect the water is continuously exchanged during fermentation.

The method of the present invention can use any liquid comprising an extract of plant material. In the context of the present application the term "an extract from plant material" refers to liquids obtained by extracting a part of a plant. In its most simple form the liquid is pressed out of parts of a plant, for example fruits using a common fruit press. However, the process of extracting the liquid from plant material may be more complex and involve several steps, including the use of extraction solvents and processes commonly known in the art as absorption, maceration, condensation, concentration, as well as other extraction processes well known in the art. One may for example obtain a soluble ingredient from a plant material by contacting the same with a solvent or concentrate a fruit juice by evaporating water from the juice initially obtained.

Any fruit can be used in the methods of the present invention. It is particularly preferred that the fruits are apples, oranges, peaches, pears, bananas, cherries, etc.

As indicated above, in its most preferred embodiment the present invention is directed methods for producing a fruit juice, comprising:
(a) providing a first liquid comprising an extract of plant material;
(b) filtering the first liquid with a filter having a pore size between 4000 and 100 Dalton to generate a second liquid comprising more components having a size larger than the pore size, including at least 18% of the saccharides, of the filter and a third liquid comprising more components having a size smaller than the pore size of the filter;
(c) incubating the second liquid with microorganisms under conditions allowing a fermentation until the saccharide content of the second liquid is reduced by at least 20% due to microbial fermentation;
(d) removing at least 80% of the alcohol from the fermented liquid to obtain a fourth liquid;
(e) combining at least a part of the fourth liquid with at least a part of the third liquid.

The fruit juices obtained by these methods contain a significantly reduced amount of natural saccharides and preferably an alternative sweetener, such as steviol glycosides, wherein the addition of rebaudioside A is particularly preferred. Microorganisms that can be used for a fermentation process in step (c) of the present invention include yeasts, Lactobacillus and Gluconobacter.

According to a particularly preferred embodiment of the present invention an alternative sweetener is added to the liquid at some stage of the procedure which alternative sweetener does not contain saccharides. This has the advantage that the original taste of the liquid from plant material is retained as completely as possible while at the same time significantly reducing the saccharide content. A number of respective sweeteners are well known in the art, including aspartame, cyclamate, saccharine, sorbitol, mannitol, isomaltol, xylotol or steviol glycosides, including rebaudioside A. Any of these sweeteners or combinations thereof may be added to the liquid from plant material during the process of the present invention. The use of steviol glycosides is preferred and the use of rebaudioside A as an alternative sweetener is especially preferred.

Other and further compounds and liquids may be added to the liquids of the present invention in the course of generating beverages for consumption.

According to step (d) of the methods of the present invention at least 80% of the alcohol or at least 80% of other fermentation products is removed from the liquid after fermentation. It is preferred to remove essentially all of the alcohol produced during fermentation, removal of 90%, 95% or 99% of the alcohol is particularly preferred. Methods for removing alcohol from fermented liquids are well known in the art and any of these methods can be used in accordance with the present invention. It is particularly preferred to use reverse osmosis for carrying out removal of the fermentation products. According to one alternative of the methods of the present invention other fermentation products than alcohol are removed from the liquid in step (d) of the methods of the present invention. For example, fermentation of fruit juice using microorganisms producing lactic acid or gluconic acid as metabolic products is well known in the art. The present invention can also be carried out with respective microorganisms and - as a consequence of the use of these microorganisms in step (d) - lactic acid or gluconic acid will then have to be removed from the liquid in step (e). Lactic acid and gluconic acid can also removed by reverse osmosis.

It may also be advantageous to remove microorganisms from the liquid after the fermentation is completed. This serves to stabilize the liquid, as growth of the microorganisms would otherwise have to be controlled in the liquid.

In a further embodiment the present invention relates to a liquid obtainable by a method as described above. The liquid is preferably a fruit juice. In a further aspect the present invention relates to beverages comprising liquids or fruit juices of the present invention which are obtainable by a method as described above. Liquids, fruit juices and beverages of the present invention contain a significantly reduced amount of natural saccharides and preferably an alternative sweetener, such as steviol glycosides, wherein the use of rebaudioside A is particularly preferred.

## Claims

1. Method for producing a liquid comprising:
(a) providing a first liquid comprising an extract of plant material;
(b) filtering the first liquid with a filter having a pore size between 4000 and 100 Dalton to generate a second liquid comprising more components having a size larger than the pore size of the filter, including at least 18% of the saccharides, and a third liquid comprising more components having a size smaller than the pore size of the filter;
(c) incubating the second liquid with microorganisms under conditions allowing a fermentation until the saccharide content of the second liquid is reduced by at least 20% due to microbial fermentation;
(d) removing at least 80% of the alcohol or 80% of other fermentation products from the fermented liquid to obtain a fourth liquid;
(e) combining at least a part of the fourth liquid with at least a part of the third liquid.

2. Method according to claim 1, wherein the filter used in step (a) has a pore size between 3000 and 150, between 2500 and 150, between 2000 and 200 or between 1600 and 200 Dalton.

3. Method according to claim 1, wherein components having a size of larger than 4000 Dalton and smaller than 100 Dalton are at least partially removed by filtration from the extract in step (b) and the fraction comprising components with a size between 100 and 4000 Dalton, including at least 18% of the saccharides, is fermented in step (c).

4. Method according to any of the preceding claims, wherein the second liquid is diluted with water prior to or during fermentation.

5. Method according to any of the preceding claims, wherein the liquid comprising an extract of plant material is a fruit juice.

6. Method according to any of the preceeding claims, wherein the microorganisms used to incubate the liquid are selected from the group consisting of yeast, Lactobacillus and Gluconobacter.

7. Method according to any of the preceding claims, wherein a saccharide free sweetener is added to the liquid.

8. Method according to any of the preceding claims, wherein a sweetener is added to the liquid which sweetener is selected from aspartame, cyclamate, saccharine, sorbitol, mannitol, isomaltol, xylotol or steviol glycosides, including rebaudioside A.

9. Method according to any of the preceding claims, wherein vitamins, amino acids, proteins or salts are further added to the liquid.

10. Method according to any of the preceding claims, wherein at least 90%, 95% or 99% of the alcohol produced during fermentation is removed from the fermented liquid in step (d).

11. Method according to any of the preceding claims, wherein a fermentation product other than alcohol is removed from the fermented liquid in step (d).

12. Method according to any of the preceding claims, wherein the other fermentation product is lactic acid or gluconic acid.

13. Method according to any of the preceding claims, wherein the microorganisms are removed from the liquid after step (c) of the method of claim 1.

14. Liquid obtainable by a method of any of claims 1-13.

15. Fruit juice obtainable by a method according to any of claims 1-13.

16. Beverage or food additive comprising a liquid obtainable by a method of any of claims 1-14.
